# EUROPÄISCHE PATENTSCHRIFT

(11) **EP 2 840 194 B1**
(45) Veröffentlichungstag und Bekanntmachung des Hinweises auf die Patenterteilung: **27.07.2016**
(21) Anmeldenummer: 14180936.8
(22) Anmeldetag: 14.08.2014
(51) Int. Cl.: F16B 12/14, E04B 1/26, E04G 23/02

(54) **Holzbauteilverbund und Herstellungsverfahren**
Wood component composite and method for manufacturing the same
Élément en bois composite et procédé de fabrication

(30) Priorität: 19.08.2013 DE 102013216351
(43) Veröffentlichungstag der Anmeldung: 25.02.2015
(73) Patentinhaber: Technische Universität München, 80333 München (DE)
(72) Erfinder: Schaffrath, Jörg, 81673 München (DE); Dietsch, Philipp, 80333 München (DE); Schumacher, Nils, 80809 München (DE)
(74) Vertreter: Hoefer & Partner Patentanwälte mbB

(56) Entgegenhaltungen:
- CH-A5- 673 305
- GB-A- 2 299 828
- JP-A- 2012 140 820
- US-A- 5 466 086
- US-A- 5 650 210
- DATABASE WPI Week 201079 25. November 2010 (2010-11-25) Thomson Scientific, London, GB; AN 2010-P42548 XP002733395, -& JP 2010 265663 A (ALPHA KOGYO KK) 25. November 2010 (2010-11-25)
- DATABASE WPI Week 200149 12. Juni 2001 (2001-06-12) Thomson Scientific, London, GB; AN 2001-454796 XP002733392, -& JP 2001 159192 A (ICHIURA TOSHI KAIHATSU KENCHIKU CONSULTA) 12. Juni 2001 (2001-06-12)

## Beschreibung

Die Erfindung betrifft einen Bauteilverbund, in dem den Werkstoff Holz aufweisende Bauteile mittels einer Stange miteinander verbunden sind. Weiter betrifft die Erfindung ein Verfahren zum Herstellen eines solchen Verbundes.

Im Holzbau besteht nicht selten die Anforderung, zwei Holzbauteile miteinander zu verbinden. Klassischerweise werden Holzbauteile miteinander verschraubt oder mit Stahlblechen miteinander verbunden, wobei die Stahlbleche mittels Löchern darin mit den Holzbauteilen verbunden werden. Es ist bekannt, Holzbauteile zu schlitzen und in den Schlitz ein Stahlblech einzubringen. Die Holzbauteile werden anschließend mit Passbolzen mit dem Stahlblech verbunden, wodurch ein fester Bauteilverbund hergestellt wird. Derartige Verbindungen werden beispielsweise bei der Sanierung von Gebäuden hergestellt, insbesondere, wenn Teile von bestehenden Holzbauteilen ausgetauscht werden müssen, etwa Teile von Holzbalken. Nachteilig bei den bekannten Verfahren mittels Verbindungsblechen ist, dass entweder die Bleche oder die Passbolzen an dem fertiggestellten Bauteilverbund sichtbar sind, wodurch auch eine Reparaturstelle gut sichtbar ist. Außerdem ist nachteilig, dass zum Einbringen von Bohrungen für die Passbolzen oder zum Aufschrauben von Blechen auf einer Außenoberfläche von Holzbauteilen ausreichend Raum um das Holzbauteil herum zur Verfügung stehen muss. Schraubenlöcher und Bohrungen für Passbolzen schwächen die zu verbindenden Holzbauteile. Durch die Anordnung von Metallbauteilen, insbesondere von Stahlbauteilen, an den Holzbauteilen können diese der Witterung oder zumindest einer Umgebungsatmosphäre ungeschützt ausgesetzt sein, wodurch sie verstärkt zu Korrosion neigen. Auf Grund der außenliegenden Anordnung der Metallbauteile kann es nicht zuletzt erforderlich sein, diese zusätzlich gegen Feuereinfluss zu schützen.

US 5 466 086 A zeigt einen Bauteilverbund nach dem Oberbegriff des Anspruchs 1. Weiteren relevanten Stand der Technik zeigt beispielsweise CH 673 305 A5.

Aufgabe der vorliegenden Erfindung ist es daher, einen stabilen, unauffälligen Bauteilverbund zu schaffen, der einfach herstellbar ist.

Diese Aufgabe wird mit dem Gegenstand des Anspruchs 1 gelöst. Die Unteransprüche zeigen bevorzugte Weiterbildungen der Erfindung.

Ein Vorteil des erfindungsgemäßen Bauteilverbunds ist, dass die Stange als Verbindungselement im Inneren der zu verbindenden Bauteile angeordnet und somit normalerweise nicht sichtbar ist. Die Verbindung ist zudem platzsparend, da keine Teile des Bauteilverbunds über die Außenoberflächen der zu verbindenden Bauteile hinaus vorstehen. Ein weiterer Vorteil ist, dass beim Ersetzen von einem Teil eines bestehenden Bauteils das Ersatzstück nicht am Ort der Verbindung bearbeitet werden muss, sondern abseits davon vorbereitend hergestellt werden kann. Ein weiterer Vorteil ist, dass die Stange im Inneren des Bauteilverbunds gut vor Korrosion und außerdem vor schneller Erwärmung bei einem Brand geschützt ist. Außerdem ist vorteilhaft, dass der Bauteilverbund hergestellt werden kann, indem in vielen Ausführungsformen die zu verbindenden Bauteile quer zur Stangenlängsachse aufeinander zu bewegt werden können, wodurch in vielen Fällen eine Bewegung eines der Bauteile in Stangenlängsrichtung vermieden werden kann. Der Einführweg der Stange in das Schlitzbauteil quer zu der Stangenlängsachse zur Herstellung der Verbindung ist normalerweise sehr. Auf diese Weise kann der Bauteilverbund auf engem Raum hergestellt werden. Das Loch kann durch Bohren in das Lochbauteil eingebracht werden. Zur Positionierung des Lochs kann eine Bohrschablone verwendet werden.

Die Außenfläche des Schlitzbauteils, in die die Vertiefung eingebracht ist, verläuft vorzugsweise wenigstens näherungsweise in Richtung der Stangenlängsachse. In einem Bauteilverbund, in dem ein Schlitzbauteil und ein Lochbauteil gewinkelt miteinander verbunden werden, kann die Außenfläche des Schlitzbauteils zu der Stangenlängsachse einen erheblichen Winkel aufweisen, beispielsweise ungefähr den Winkel, den das Schlitzbauteil und das Lochbauteil zueinander aufweisen. Das Lochbauteil und das Holzbauteil sind vorzugsweise langgestreckte Bauteile, beispielsweise Balken. Sie haben vorzugsweise einen rechteckigen oder quadratischen Querschnitt. Auch ein runder Querschnitt oder noch weitere Querschnittsformen sind grundsätzlich denkbar. Bevorzugt fluchten die Längsachsen der Bauteile und der Stange. Vorzugsweise ist die Stange in dem Loch des Lochbauteils und/oder in dem Schlitz des Schlitzbauteils so wenig schräggestellt, dass die Stange an jeder Stelle in dem Loch bzw. in dem Schlitz von Klebstoff umgeben ist. Der Klebstoff kann auch ein Gießharz sein. Bevorzugt ist der Klebstoff schwindungsarmer Klebstoff, etwa ein Zwei-Komponenten-Epoxidharz-Klebstoff. Besonders bevorzugt ist die Verbindungsstelle des Schlitzbauteils und/oder des Lochbauteils flächig ausgebildet und verläuft quer zur Längsachse eines der Bauteile und/oder zu der Stangenlängsachse. Die Außenfläche des Schlitzbauteils mit der Vertiefung ist vorzugsweise in Längsrichtung des Schlitzbauteils angeordnet.

Mit dem Begriff "Schlitz" im Wort "Schlitzbauteil" ist nicht gemeint, dass die Vertiefung unbedingt als Schlitz ausgeführt sein muss, was jedoch der Fall sein kann, bzw. muss die Vertiefung nicht unbedingt schmal und tief oder mit parallelen Seitenwänden ausgeführt sein, was jedoch ebenfalls der Fall sein kann. Der Verlauf der Vertiefung muss auch nicht einer geraden Linie folgen. Vorzugsweise ist jedoch die Vertiefung mit einem rechteckigen Querschnitt ausgeführt. Dessen Breite ist bevorzugt geringer als dessen Tiefe. Die Bauteile können aus Vollholz oder aus Brettschichtholz hergestellt sein. Die Vertiefung ist vorzugsweise in einem Mindestabstand zu Außenflächen des Schlitzbauteils, die nicht die Außenfläche sind, in die die Vertiefung eingebracht ist, angeordnet. Auf diese Weise wird sichergestellt, dass Kräfte von der Stange das Holz neben der Stange nicht überlasten. Vorzugsweise ist die Vertiefung breiter als der Durchmesser der Gewindestangen, vorzugsweise um etwa 2mm breiter. Die Vertiefung bzw. das Loch sind vorzugsweise jeweils in das Holz des jeweiligen Bauteils eingebracht. Die Länge der Vertiefung ist vorzugsweise nach DIN EN 1995-1-1/NA:2012-12 oder nach einer bauaufsichtlichen Zulassung, etwa eines verwendeten Klebstoffs, ausgeführt. Die Länge des im Schlitzbauteil einzubringenden Teils der Stange ist bevorzugt wenigstens näherungsweise gleich der Länge des Schlitzes. Die Länge des im Lochbauteil einzubringenden Teils der Stange ist vorzugsweise wenigstens angenähert gleich der Tiefe des Lochs.

Alternativ zu einem Ausführungsbeispiel mit genau einer Stange können in einer Vertiefung mehrere Stangen angeordnet sein, vorzugsweise nebeneinander. Es können auch mehrere Vertiefungen in dem Schlitzbauteil vorgesehen sein, in der in dem Bauteilverbund jeweils mindestens eine Stange angeordnet ist. Besonders bevorzugt sind vier Stangen in zwei Vertiefungen vorgesehen, wobei die Stangen vorzugsweise an den Eckpunkten eines virtuellen Rechtecks angeordnet sind. Im Vergleich zu einer Ausführungsform mit nur einer Stange bietet die Variante mit mehreren Stangen auf Grund der Anordnung der Stangen weiter zu den Außenflächen der zu verbindenden Bauteile hin und damit weiter weg von der neutralen Faser bei einer Biegung eine erhöhte Biegefestigkeit. Ein solcher Bauteilverbund wird daher besonders bevorzugt bei einem hohen Anteil der Biegelast an einer Gesamtlast auf dem Bauteilverbund eingesetzt.

In einer Ausführungsform des Bauteilverbunds ist die Stange als Gewindestange ausgeführt. Dies hat den Vorteil, dass zusätzlich zu dem Stoffschluss zwischen der Gewindestange und dem Klebstoff Formschluss auftritt. In Varianten können auch Stangen mit andersartigen Oberflächenvertiefungen oder Riffelungen, wie etwa Bewehrungsstahl oder dgl., verwendet werden. Die Stange bzw. Gewindestange ist vorzugsweise aus Stahl. Vorzugsweise weist sie ein metrisches Gewinde auf. So können Standard-Gewindestangen kostengünstig verwendet werden. Bevorzugt werden Gewindestangen der Festigkeitsklasse 4.6 verwendet, die etwa 400 MPa Zugfestigkeit und etwa 240 MPa Streckgrenze aufweisen. Bevorzugt wird die Größe M12 verwendet. Alternativ zu einem kreisrunden Querschnitt kann die Stange auch einen rechteckigen, quadratischen, polygonalen oder einen anderen Querschnitt aufweisen. Als eine Stange gilt im Sinne dieser Patentanmeldung auch Flachmaterial oder Blech oder ein ähnliches langgestrecktes Material, das die Funktion der Stange erfüllen kann, und das beispielsweise eine größere Höhe als Breite aufweist.

Erfindungsgemäß weist der Bauteilverbund eine Fülleinrichtung auf, die in der langgestreckten Verbindung angeordnet ist. Die Fülleinrichtung füllt die Vertiefung zumindest teilweise aus und überdeckt auf diese Weise wenigstens einen Teil der Stange. Dadurch ergibt sich der Vorteil, dass die Stange von außen weniger oder nicht sichtbar ist. Bevorzugt erstreckt sich die Fülleinrichtung von der Verbindungsstelle des Schlitzbauteils bis zum entgegengesetzten Ende der Vertiefung. Die Fülleinrichtung erstreckt sich bevorzugt von der Außenoberfläche des Bauteilverbunds bis nahe der Stange. Die Fülleinrichtung kann in die Vertiefung geklemmt oder gepresst sein, ferner ist sie eingeklebt. Die Fülleinrichtung fügt sich bevorzugt passgenau in die Vertiefung ein, besonders bevorzugt über deren ganze Länge. Seitlich zwischen der Fülleinrichtung und der Vertiefung ist vorzugsweise wenigstens eine Klebefuge, insbesondere zwei Klebefugen, vorgesehen. Diese Klebefuge(n) kann oder können mit demselben Klebstoff gefüllt sein, mit dem auch die Stange in die Vertiefung eingeklebt ist. Besonders bevorzugt ist die Fülleinrichtung an wenigstens einer ihrer zu den Seitenwänden der Vertiefung gerichteten Außenseiten abgeschrägt ausgeführt. Im fertigen Bauteilverbund führt diese Schräge zu einer Verjüngung der Fülleinrichtung in Richtung des Inneren der Vertiefung. In den Spalt zwischen einer Seitenwand der Vertiefung und die sich verjüngenden Außenfläche der Fülleinrichtung kann Klebstoff eindringen und die Fülleinrichtung stoffschlüssig mit der Vertiefung verbinden. Zugleich kann die Fülleinrichtung am Übergang der Vertiefung zu der Außenfläche des Schlitzbauteils, in die diese eingebracht ist, passgenau in die Vertiefung eingesetzt sein, sodass ein Spalt zwischen der Fülleinrichtung und der Vertiefung wenig oder nicht sichtbar ist, obwohl die Fülleinrichtung zum Inneren der Vertiefung hin zum Zwecke der Verklebung geringere Abmessungen aufweist. Die Dicke der Fülleinrichtung in Richtung des Inneren des Schlitzbauteils ist bevorzugt etwas geringer als die Tiefe der Vertiefung abzüglich des Durchmessers der Stange. So verbleibt ein Hohlraum für Klebstoff, mit dem die Stange in der Vertiefung und die Fülleinrichtung mit der Stange und der Vertiefung verklebt werden können.

Erfindungsgemäß weist die Fülleinrichtung wenigstens ein Einfüllloch auf, durch das Klebstoff in das Innere der Vertiefung unterhalb der eingesetzten Fülleinrichtung eingebracht werden kann. Das oder die Einfülllöcher gehen von einer außen am Bauteilverbund angeordneten Oberfläche der Fülleinrichtung bis zu einer im Inneren der Vertiefung angeordneten Oberfläche der Fülleinrichtung durch. Besonders bevorzugt weist die Fülleinrichtung wenigstens zwei Einfülllöcher auf, so dass durch ein Einfüllloch Klebstoff in die Vertiefung eingefüllt werden kann, während durch ein oder mehrere Einfülllöcher verdrängte Luft aus der Vertiefung entweichen kann. Vorzugsweise ist in der Fülleinrichtung ein Einfüllloch nahe einem Ende in Längsrichtung der Fülleinrichtung angeordnet, insbesondere an beiden Enden.

In einer weiteren Ausführungsform des Bauteilverbunds ist die Mitte der Stange in der Mitte von wenigstens einem von Lochbauteil und Schlitzbauteil angeordnet, alternativ oder zugleich in dessen Flächenschwerpunkt. Dies gilt insbesondere für den Querschnitt an der Verbindungsstelle des Schlitzbauteils bzw. Lochbauteils. In diesen Fällen verläuft auch das Loch in dem Lochbauteil und/oder die Vertiefung in dem Schlitzbauteil durch den jeweiligen Flächenschwerpunkt des Bauteils.

In einer weiteren Ausführungsform, die mit allen anderen Ausführungsformen kombinierbar ist, weist das Lochbauteil und/oder das Schlitzbauteil einen rechteckigen, quadratischen, runden, halbrunden oder ähnlichen Querschnitt auf, insbesondere an der Verbindungsstelle des jeweiligen Bauteils. Der Durchmesser der Stange ist vorzugsweise so gering gewählt, dass die Beanspruchbarkeit des Bauteilverbunds durch die Stange begrenzt ist. Vorzugsweise ist die Länge des Schlitzes so gewählt, dass die Festigkeit der Stange etwa gleich der Festigkeit der Verklebung im Schlitz ist. Die Tiefe des Lochs ist bevorzugt so gewählt, dass die Festigkeit der Verklebung der Stange in dem Loch etwa gleich der Zugfestigkeit der Stange ist. Alternativ ist denkbar, die Länge der Stange so kurz zu wählen, dass die Klebefuge zwischen Stange und Loch bzw. Vertiefung die Festigkeit des Bauteilverbunds bestimmt. Besonders bevorzugt sind die Abmessungen von Elementen und geometrischen Merkmalen, die in dem Bauteilverbund für die Tragfähigkeit relevant sind, insbesondere der Durchmesser und die Länge der Stange sowie die Länge des Schlitzes und die Tiefe des Loches, derart ausgeführt, dass diese Elemente und Merkmale bei Belastung des Bauteilverbunds wenigstens nahezu gleichmäßig beansprucht sind. Als Belastungsarten sind zum Beispiel Torsion, Biegung, Zug, Druck und Schub sowie Überlagerungen davon denkbar.

In einem weiteren Aspekt der Erfindung wird ein Reparaturbauteil zur Herstellung von je einem Bauteilverbund an jedem Ende in Längsrichtung des Reparaturbauteils vorgeschlagen, wobei der Bauteilverbund nach einer der vorstehend beschriebenen Ausführungsformen ausgeführt ist. Das Reparaturbauteil kann an jedem seiner Enden die Funktion eines Schlitzbauteils oder eines Lochbauteils haben, wobei diese Funktionen auch gemischt sein können. Vorteil eines solchen Reparaturbauteils ist, dass es an einem von der Baustelle entfernten Ort vorgefertigt werden kann, was die Zeit zur Herstellung der Verbindung auf der Baustelle verringert. Mit einem solchen Reparaturbauteil kann ein Teil eines bestehenden Bauteils ersetzt werden, insbesondere eines Holzbalkens, insbesondere bei der Sanierung von bestehenden Bauten.

In einem weiteren Aspekt der Erfindung wird ein Verfahren zum Herstellen eines Bauteilverbundes nach einer der vorstehend beschriebenen Ausführungsformen vorgeschlagen. Dabei wird vor dem Herstellen des Bauteilverbunds die Stange in das Loch des Lochbauteils eingeklebt. Beim Herstellen des Bauteilverbunds wird die Stange in die Vertiefung des Schlitzbauteils eingelegt und in der Vertiefung verklebt. Vorzugsweise wird die Stange in die Vertiefung wenigstens näherungsweise in Normalrichtung zu der Außenfläche des Schlitzbauteils, in die die Vertiefung eingebracht ist, eingelegt. Im Unterschied zum Einstecken der Stange in das Loch des Lochbauteils ist hierfür viel weniger Montageraum und somit auch weniger Montagebewegung erforderlich. Zum Verkleben wird wenigstens ein Teil der Vertiefung mit Klebstoff gefüllt. Vorbereitend wird die Vertiefung in das Schlitzbauteil eingebracht. Bevorzugt wird mit einer Handkreissäge eine Vertiefung in Form eines Schlitzes in das Schlitzbauteil geschnitten. Alternativ können auch andere Werkzeuge verwendet werden, wie etwa eine Oberfräse oder ein Kettenstemmer oder dergleichen. Vorteilhaft kann die Vertiefung bzw. der Schlitz so schneller hergestellt werden, weil eine zusätzliche Bearbeitung mit einem Stemmeisen von Hand entfallen kann. Nach dem Herstellen der Vertiefung wird diese vorzugsweise von Verunreinigungen gesäubert, insbesondere von Spänen, Staub und/oder dergleichen. Besonders bevorzugt ist das Schlitzbauteil ein bestehendes Bauteil eines Sanierungs- oder Reparaturobjekts.

Erfindungsgemäß wird wenigstens ein Teil der Vertiefung mit einer Fülleinrichtung verschlossen. Dieser Schritt wird ausgeführt, bevor das Verkleben der Stange in der Vertiefung ausgeführt wird.

In einer weiteren Ausführungsform des Verfahrens werden Fugen zwischen dem Schlitzbauteil und dem Lochbauteil und/oder dem Schlitzbauteil und einer in dessen Vertiefung eingesetzten Fülleinrichtung vor dem Verkleben der Stange mit dem Schlitzbauteil mit Klebeband abgedeckt. Durch derartiges Abdecken wird verhindert, dass Klebstoff aus diesen Fugen austritt. Ausgetretener Klebstoff muss u. U. entfernt werden, führt zu übermäßigem Klebstoffverbrauch und kann das Aussehen des Bauteilverbunds beeinträchtigen. Das Klebeband kann nach dem Verkleben der Stange in dem Schlitzbauteil wieder abgezogen werden. Als Klebeband kann ein herkömmliches Gewebetape, Packband, Kreppband oder dgl. geeignet sein.

Erfindungsgemäß wird der Hohlraum in der Vertiefung unter der Fülleinrichtung wenigstens teilweise mit Klebstoff ausgefüllt. Dabei wird bevorzugt die Stange mit Klebstoff wenigstens teilweise, bevorzugt vollständig umschlossen, so dass er in der Vertiefung und an der Fülleinrichtung befestigt wird. Wenn die Fülleinrichtung mit kleineren Abmessungen in Breitenrichtung der Vertiefung ausgeführt ist, als die Vertiefung selbst aufweist, sind zwischen wenigstens einer, vorzugsweise zwischen beiden Seitenwänden und der Fülleinrichtung, Fugen angeordnet, die beim Verkleben vorzugsweise ebenfalls mit Klebstoff gefüllt werden. Auf diese Weise entsteht ein Bauteilverbund, in dem alle Elemente miteinander verklebt sind, und der dadurch eine gute Festigkeit aufweist. Dabei kann die Fülleinrichtung Lasten in dem Bauteilverbund übertragen. Vorzugsweise weist die Fülleinrichtung mehrere Einfülllöcher auf, wobei der Klebstoff in wenigstens eines der Einfülllöcher eingefüllt wird, während in ein weiteres Einfüllloch kein Klebstoff eingefüllt wird, so dass daraus Luft entweichen kann, die in der Vertiefung von dem Klebstoff verdrängt wird.

Vorzugsweise wird als Vorbereitung für das Herstellverfahren auf die Stange ein Abstandshalter, vorzugsweise in Form eines Rings, der im Falle einer Gewindestange mit einem Innengewinde versehen sein kann, aufgebracht. Mit diesem Abstandshalter wird ein vorgegebener Abstand zwischen der Stange und wenigstens einem Abschnitt einer Innenoberfläche der Vertiefung erreicht. Vorzugsweise sind zwei Abstandshalter auf die Stange in dem Bereich aufgebracht, der in dem Bauteilverbund in der Vertiefung angeordnet ist. Dadurch kann erreicht werden, dass ein geeigneter Abstand zwischen wenigstens einer Innenwand der Vertiefung und der Stange nicht nur einer Stelle, sondern entlang des gesamten, in der Vertiefung angeordneten Teils der Stange erreicht wird. Besonders bevorzugt ist ein Abstandshalter in dem Bauteilverbund an dem Ende der Stange, das sich in dem Schlitzbauteil befindet, und der andere Abstandshalter nahe dem Übergang von Schlitzbauteil und Lochbauteil angeordnet. Denkbar ist es weiter, einen Abstandshalter in dem Loch des Lochbauteils nahe dem Übergang zwischen dem Schlitzbauteil und dem Lochbauteil anzuordnen. Dadurch wird ein gleichmäßiger Abstand zwischen der Stange und der Lochinnenwand erreicht. Im Falle einer Gewindestange kann der Abstandshalter aufgeschraubt sein, wobei er eine Mutter oder ein Ring mit Innengewinde sein kann. Zum Einbringen von Klebstoff in den Zwischenraum zwischen der Lochinnenwand und der Stangenaußenoberfläche kann zum Beispiel vor dem Einstecken der Stange Klebstoff in das Loch gefüllt werden, der von der beim Einstecken vorrückenden Stange in den Zwischenraum verdrängt wird, vorzugsweise, bis Klebstoff austritt. In einer Variante können in das Lochbauteil ein oder mehrere Einfülllöcher eingebracht sein, die sich von einer Außenfläche des Lochbauteils bis zu der Lochinnenwand erstrecken. Durch das oder die Einfülllöcher kann Klebstoff oder Gießharz in das Loch eingebracht werden, um die Stange in dem Loch zu verkleben.

In einer weiteren Ausführungsform des Verfahrens wird vorgeschlagen, beim Ersetzen eines Abschnitts eines bestehenden Bauteils, das wenigstens teilweise aus Holz hergestellt ist, zwei der vorstehend beschriebenen Bauteilverbünde herzustellen. Dazu wird der zu ersetzende Teil oder Abschnitt des bestehenden Bauteils entnommen, beispielsweise herausgesägt, wobei zwei Entnahmeflächen entstehen, von denen je eine an einem der verbleibenden Teilabschnitte angeordnet ist. Insbesondere wirkt wenigstens eine der Entnahmeflächen nach der Herstellung eines Bauteilverbunds als Verbindungsfläche von einem von dessen Bauteilen. Die Teilabschnitte mit den Entnahmeflächen werden jeweils als Schlitzbauteil oder als Lochbauteil aufbereitet, indem entweder ein Loch in die Entnahmefläche gebohrt wird, wodurch ein Lochbauteil entsteht, oder ein Schlitz in einen verbleibenden Teilabschnitt eingebracht wird, wodurch ein Schlitzbauteil entsteht. Das Ersatzbauteil wird vorbereitet, indem zwei einander entgegengesetzte Enden des Ersatzbauteils jeweils als komplementäres Bauteil zu dem Lochbauteil bzw. Schlitzbauteil, als das die verbleibenden Teilabschnitte jeweils vorbereitet sind, ausgebildet werden. Ob zuerst die verbleibenden Teilabschnitte oder das Ersatzbauteil vorbereitet werden, ist nicht entscheidend, sondern dass die miteinander zu verbindenden Enden zueinander passen. Beim Herstellen der beiden Bauteilverbünde kann das Ersatzbauteil im Wesentlichen quer zu seinen Stangenlängsachsen in den Zwischenraum zwischen den verbleibenden Teilabschnitten eingesetzt werden, wodurch ein Einsetzen ohne Bewegung der verbleibenden Teilabschnitte möglich ist, welche in vielen Fällen unbeweglich sind. Vorzugsweise werden die Vertiefungen in den beiden Schlitzbauteilen der beiden Bauteilverbünde jeweils in dieselbe Tiefenrichtung eingebracht. Vorzugsweise sind die beiden Enden des Ersatzbauteils jeweils als Lochbauteil vorbereitet, in das jeweils eine oder mehrere Stangen vorbereitend eingeklebt sind, wobei jeweils eine Stange in ein Loch eingeklebt ist.

Dadurch kann darauf verzichtet werden, Bohrungen in die verbleibenden Teilabschnitte einzubringen, was aufgrund der häufig feststehenden Teilabschnitte räumlich schwierig sein kann. Dagegen ist es einfacher, beispielsweise mit einer Handkreissäge, einem Stecheisen oder dergleichen, Vertiefungen, beispielsweise als Schlitze, in die verbleibenden Teilabschnitte einzubringen und sie so als Schlitzabschnitte vorzubereiten. Denkbar sind vorgefertigte Ersatzbauteile, die z.B. mit jeweils einem oder mehreren Löchern an jedem Ende und jeweils darin eingeklebten Stangen oder mit einem oder mehreren Schlitzen an jedem Ende vorbereitet sind.

In einem weiteren Aspekt der vorliegenden Erfindung wird ein Verfahren zum Sanieren eines Holztragwerks mittels einer Ausführungsform des vorstehend beschriebenen Herstellverfahrens für einen Bauteilverbund vorgeschlagen.

Weitere Einzelheiten, Vorteile und Merkmale der vorliegenden Erfindung ergeben sich aus nachfolgender Beschreibung von Ausführungsbeispielen anhand der Zeichnung. Es zeigen:
- Fig. 1: eine schematische Darstellung einer Explosionszeichnung des Bauteilverbunds;
- Fig. 2: eine schematische Zusammenbauzeichnung des Bauteilverbunds;
- Fig. 3: eine schematische perspektivische Darstellung eines Bauteilverbunds, der vier Stangen in zwei Schlitzen aufweist; und
- Fig. 4: eine schematische Darstellung eines erfindungsgemäßen Bauteilverbunds innerhalb eines Hängewerkdachs.

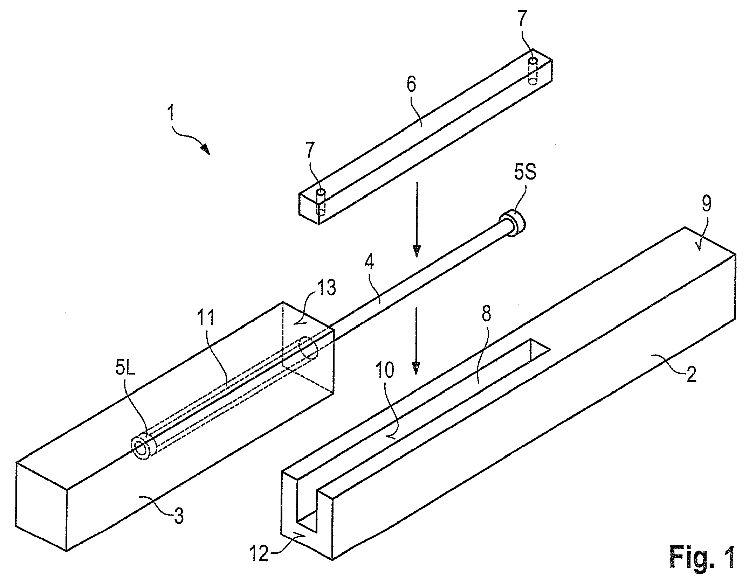

Fig. 1 zeigt schematisch eine Explosionsdarstellung des Bauteilverbunds 1, der ein Schlitzbauteil 2, ein Lochbauteil 3, eine Gewindestange 4 mit zwei Abstandshaltern 5S und 5L sowie eine Fülleinrichtung 6 mit zwei Durchgangsbohrungen 7 zeigt. Das Schlitzbauteil 2 weist eine langgestreckte Vertiefung 8 mit parallelen Seitenwänden 10 auf, die senkrecht zu der Außenoberfläche 9 des Schlitzbauteils 2 stehen, in die die langgestreckte Vertiefung 8 eingebracht ist. Die langgestreckte Vertiefung 8 weist einen rechteckigen Querschnitt auf. Die Abstandshalter 5S, 5L sind auf die Gewindestange 4 jeweils an einem von deren Enden aufgeschraubt. Der Außendurchmesser der Abstandshalter 5S, 5L ist kleiner oder gleich dem Abstand der Seitenwände 10 der langgestreckten Vertiefung zueinander. Das Lochbauteil 3 weist ein Loch 11 auf, in das die Gewindestange 4 eingeklebt ist. Das Loch 11 weist einen Durchmesser auf, der größer als der Außendurchmesser des Abstandshalters 5L ist, der in das Loch 11 eingebracht ist. Vorzugsweise befindet sich der Abstandshalter 5L bzw. das Ende der Gewindestange 4 wenigstens näherungsweise am Ende des Lochs 11 im Inneren des Lochbauteils 3. Die Stangenlängsachse fluchtet wenigstens näherungsweise mit der Längsachse des Lochs 11. Das Schlitzbauteil 2 und das Lochbauteil 3 umfassen langgestreckte Holzbauteile mit rechteckigem Querschnitt, wobei die Außenfläche 9 des Schlitzbauteils 2 eine lange Seite des Rechtecks bildet. Das Loch 11 und die langgestreckte Vertiefung 8 verlaufen jeweils durch den Flächenschwerpunkt des rechteckigen Querschnitts. Das Loch 11 ist in Längsrichtung des langgestreckten Lochbauteils 3 eingebracht. Eine Längsachse des Lochbauteils 3 liegt parallel zur Längsachse des Lochs 11. Ebenso liegt eine Längsachse des Schlitzbauteils 2 parallel zu den Seitenwänden 10 der langgestreckten Vertiefung 8. Die Fülleinrichtung 6 ist ein langgestrecktes Holzbauteil und weist einen nahezu quadratischen, einen rechteckigen, oder besonders bevorzugt einen trapezförmigen Querschnitt auf. Bei dem trapezförmigen Querschnitt ist die lange Seite der parallelen Seiten zur Anordnung nahe oder in Flucht mit der Außenoberfläche des Schlitzbauteils vorgesehen. Die Einfülllöcher 7 befinden sich jeweils an einem Ende in Längsrichtung der Fülleinrichtung 6. Die Einfülllöcher 7 sind Durchgangslöcher, deren Lochachse vorzugsweise parallel zu den Seitenwänden 10 des Schlitzbauteils 2 liegt. Die Tiefe der langgestreckten Vertiefung 8 ist vorzugsweise etwas größer als der Durchmesser des Abstandshalters 5S, der zur Aufnahme in die langgestreckte Vertiefung 8 vorgesehen ist, zzgl. einer Höhe der Fülleinrichtung 6, die diese in Eindringrichtung in die Vertiefung 8 aufweist. Die Längsachsen des Lochbauteils und des Schlitzbauteils fluchten miteinander.

Die Gewindestange 4 mit dem Abstandshalter 5S werden beim Herstellen des Bauteilverbunds in die langgestreckte Vertiefung 8 eingebracht. Vorzugsweise wird dabei im Wesentlichen eine Bewegung quer zur Stangenlängsachse der Gewindestange 4 ausgeführt. Nachdem die Gewindestange 4 und der Abstandshalter 5S wenigstens nahezu den Grund der langgestreckten Vertiefung 8 erreicht haben, kann die Fülleinrichtung 6 über der Gewindestange 4 in die langgestreckte Vertiefung 8 eingebracht werden. Dadurch verdeckt die Fülleinrichtung 6 die Gewindestange 4 und den Abstandshalter 5S in der langgestreckten Vertiefung 8. Dadurch wird eine bis auf die Einfülllöcher 7 und die Fugen der Fülleinrichtung 6 vollständige Holzoptik der Außenfläche 9 des Schlitzbauteils 2 erreicht. Durch die Anordnung der Gewindestange 4 in dem Loch 11 weist das Lochbauteil 3 ausschließlich sichtbare Außenflächen aus Holz auf.

Vorzugsweise hat die Fülleinrichtung 6 eine Breite in Richtung der Außenfläche 9, die etwas geringer als der Abstand der Seitenwände 10 der langgestreckten Vertiefung 8 ist. Nach dem Zusammenfügen, das durch Pfeile zwischen dem Schlitzbauteil 2, der Gewindestange 4 und der Fülleinrichtung 6 schematisch gezeigt ist, können die Fugen zwischen einer Verbindungsstelle 12 des Schlitzbauteils und einer Verbindungsstelle 13 des Lochbauteils mit einem Klebeband abgedeckt werden. Ebenso können die Fugen zwischen der Fülleinrichtung 6 und den Seitenwänden 10 der langgestreckten Vertiefung mit einem oder mehreren Klebebändern abgedeckt werden. Dabei werden die Einfülllöcher 7 freigelassen, ein entsprechendes Loch in dem Klebeband vorgesehen oder besonders bevorzugt ein geschlossenes Klebeband an den Einfülllöchern durchbrochen, um diese freizulegen. Um die Gewindestange 4 in die langgestreckte Vertiefung 8 einzukleben, kann in eines der Einfülllöcher 7 ein Klebstoff oder Gießharz eingefüllt werden, das sich entlang des Hohlraums um die Gewindestange 4 und in der Nähe des Grundes der langgestreckten Vertiefung 8 verteilt. Durch das zweite Einfüllloch 7 kann Luft entweichen, die von dem Klebstoff verdrängt wird. Vorzugsweise wird solange Klebstoff eingefüllt, bis auch die Fugen zwischen den Verbindungsstellen 12 und 13 und zwischen der Fülleinrichtung 6 und den Seitenwänden 10 der langgestreckten Vertiefung 8 gefüllt sind und/oder bis Klebstoff aus dem zweiten Einfüllloch austritt. Nach dem Einfüllen des Klebstoffs wird das Aushärten desselben ausgelöst und/oder abgewartet. Vorzugsweise wird ein schwindarmer Klebstoff, etwa ein Zwei-Komponenten-Epoxidharz-Klebstoff, verwendet. Danach ist die Festigkeit des Bauteilverbunds hergestellt und die Klebstreifen, soweit angebracht, können entfernt werden.

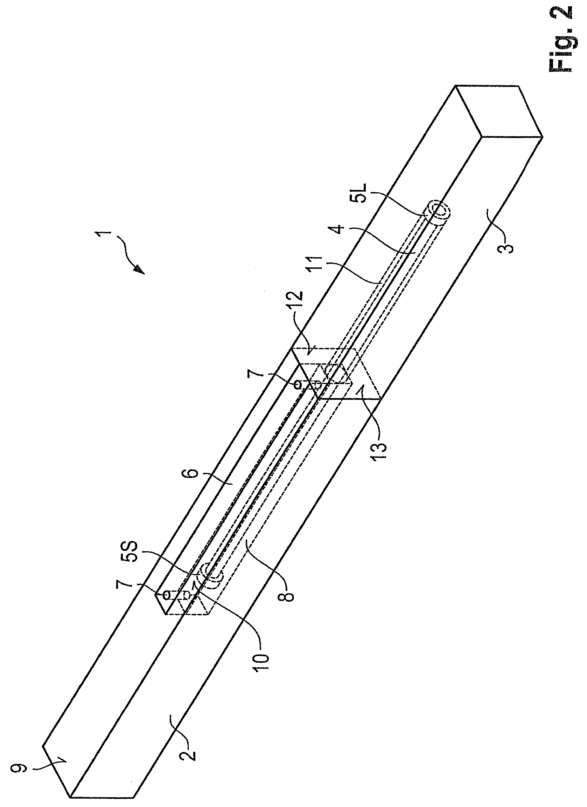

Fig. 2 zeigt schematisch eine Zusammenbauzeichnung des Bauteilverbundes 1. Die Gewindestange 4 ist in der langgestreckten Vertiefung 8 zwischen deren Seitenwänden 10 und in der Nähe von deren Grund angeordnet. Sie ist von der Fülleinrichtung 6 vollständig überdeckt. Die Außenoberfläche der Fülleinrichtung 6 fluchtet mit der Außenoberfläche 9 des Schlitzbauteils 2. Die Außenoberflächen des Schlitzbauteils 2 und des Lochbauteils 3, die keine Stirnflächen dieser Bauteile sind, fluchten wenigstens näherungsweise miteinander. Das Schlitzbauteil 2 und das Lochbauteil 3 berühren einander an ihren Verbindungsstellen 12 und 13.

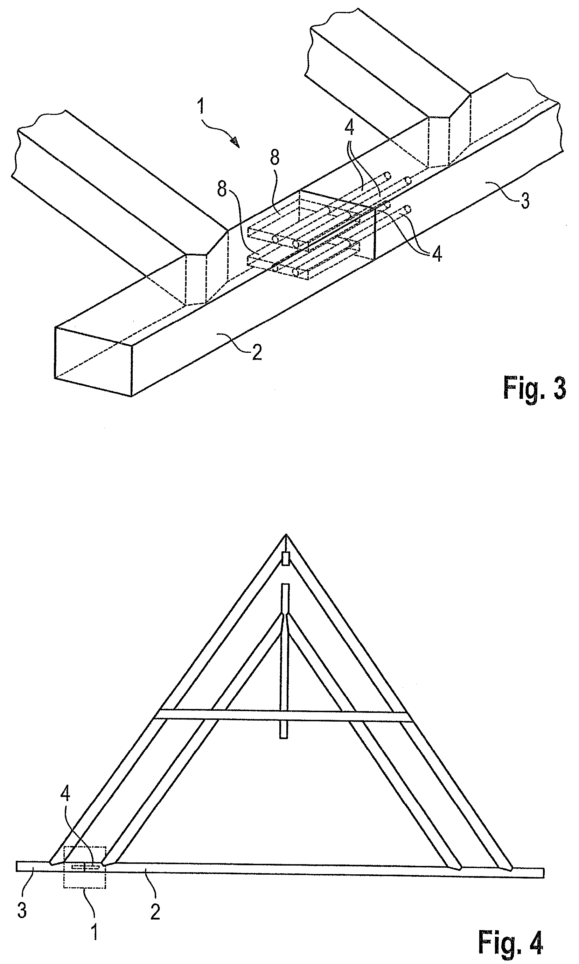

Fig. 3 zeigt eine Variante des Bauteilverbunds mit vier Gewindestangen 4 und zwei langgestreckten Vertiefungen 8 in einer perspektivischen Ansicht. Jeweils zwei der Gewindestangen sind in eine der langgestreckten Vertiefungen 8 eingebracht. Das Lochbauteil 3 weist vier Löcher auf, in die jeweils eine der Gewindestangen 4 eingeklebt ist. Die beiden langgestreckten Vertiefungen 8 sind parallel zueinander ausgerichtet. Die Gewindestangen 4 sind zueinander parallel ausgerichtet und haben in ihrer langgestreckten Vertiefung 8 jeweils denselben Abstand zueinander. Die Stangenlängsachsen der Gewindestangen 4 liegen in einem Querschnitt durch den Bauteilverbund auf den Ecken eines Rechtecks. Dieses Rechteck ist in ein Rechteck, das dem Querschnitt des Schlitzbauteils 2 bzw. des Lochbauteils 3 in etwa mittig angeordnet ist. Die Herstellung des Bauteilverbunds 1 kann analog zu der Ausführungsform mit einer einzigen Gewindestange 4, wie sie in den Fig. 1 und 2 gezeigt ist, ausgeführt werden. Vorzugsweise werden dabei zwischen die Gewindestangen in den langgestreckten Vertiefungen 8 Abstandshalter eingebracht, die für einen gleichmäßigen Abstand der Gewindestangen innerhalb der langgestreckten Vertiefungen 8 sorgen. Nicht dargestellt ist eine Fülleinrichtung 6, mit der die langgestreckten Vertiefungen zur Außenfläche des Schlitzbauteils 2 hin abgeschlossen werden kann.

Fig. 4 zeigt schematisch eine Ansicht eines Hängewerkdachs, in dem ein Bauteilverbund 1 nach der Erfindung angeordnet ist. Der Bereich des Bauteilverbunds ist mit einem quadratischen Kasten umzeichnet. Im Inneren des Bauteilverbunds 1 ist eine Gewindestange 4 schematisch dargestellt. Das Lochbauteil 3 stellt ein ausgetauschtes Endstück des Querbalkens dar, dessen verbleibender Teil als Schlitzbauteil 2 ausgeführt ist. Auf diese Weise kann das Loch in das Lochbauteil 3 von der Baustelle entfernt eingebracht werden, was Vorteile für den Arbeitsablauf und den Einsatz von Maschinen bietet. In das verbleibende Teil ist mit einer Handkreissäge ein Schlitz als langgestreckte Vertiefung eingesägt, um es zu einem Schlitzbauteil zu machen.

### Bezugszeichenliste

- 1: Bauteilverbund
- 2: Schlitzbauteil
- 3: Lochbauteil
- 4: Stange
- 5S: Abstandshalter im Schlitzbauteil
- 5L: Abstandshalter im Lochbauteil
- 6: Fülleinrichtung
- 7: Einfüllloch
- 8: Vertiefung
- 9: Außenfläche des Schlitzbauteils
- 10: Seitenwände der Vertiefung
- 11: Loch
- 12: Verbindungsstelle des Schlitzbauteils
- 13: Verbindungsstelle des Lochbauteils

## Patentansprüche

1. Bauteilverbund (1) zur Verbindung eines in wesentlichen Teilen Holz aufweisenden Lochbauteils (3) mit einem in wesentlichen Teilen Holz aufweisenden Schlitzbauteil (2) an einer Verbindungsstelle (13) des Lochbauteils (3) und einer Verbindungsstelle (12) des Schlitzbauteils (2) und mittels einer Stange (4) mit einer Stangenlängsachse, wobei
- eine Außenfläche (9) des Schlitzbauteils (2) eine langgestreckte Vertiefung (8) bis zu der Verbindungsstelle (12) des Schlitzbauteils (2) aufweist,
- das Lochbauteil (3) in seiner Verbindungsstelle (13) ein Loch (11) aufweist, und
- die Stange (4) in das Loch (11) und in die langgestreckte Vertiefung (8) eingeklebt ist, sodass das Lochbauteil (3) und das Schlitzbauteil (2) zumindest über die Stange (4) und die Verbindungsstellen (12, 13) miteinander verbunden sind,
- der Bauteilverbund (1) eine Fülleinrichtung (6) in der langgestreckten Vertiefung (8) aufweist, wobei die Fülleinrichtung (6) einen Abschnitt der Stange (4) in der Vertiefung (8) zumindest teilweise überdeckt,
**dadurch gekennzeichnet, dass**
die Fülleinrichtung (6) ein durchgehendes Einfüllloch (7) und insbesondere zwei oder mehr durchgehende Einfülllöcher (7) aufweist, das oder die von einer außen am Bauteilverbund (1) angeordneten Oberfläche der Fülleinrichtung (6) bis zu einer im Inneren der Vertiefung (8) angeordneten Oberfläche der Fülleinrichtung (6) verläuft bzw. verlaufen, sodass durch das oder die Einfülllöcher (7) ein Klebstoff in die Vertiefung (8) einfüllbar ist und mit dem Klebstoff die Stange (4) in die Vertiefung (8) einklebbar ist.

2. Bauteilverbund (1) nach Anspruch 1, bei dem die Stange (4) als Gewindestange (4) ausgeführt ist.

3. Bauteilverbund (1) nach einem der vorangehenden Ansprüche, bei dem eine Mitte der Stange im Flächenschwerpunkt der Verbindungsstelle (12) des Schlitzbauteils (2) und/oder der Verbindungsstelle (13) des Lochbauteils (3) angeordnet ist.

4. Verfahren zum Herstellen eines Bauteilverbunds (1) nach einem der vorangehenden Ansprüche, wobei das Lochbauteil (3), in das die Stange (4) eingeklebt ist, mit dem Schlitzbauteil (2) verbunden wird, indem die Stange (4) in die Vertiefung (8) des Schlitzbauteils (2) eingebracht und in der Vertiefung (8) verklebt wird,
- wobei wenigstens ein Teil der Vertiefung (8) mit der Fülleinrichtung (6) verschlossen wird, wobei wenigstens ein Teil der Stange (4) von der Fülleinrichtung (6) überdeckt wird,
**dadurch gekennzeichnet, dass**
- wenigstens ein Teil eines in der Vertiefung (8) unter der Fülleinrichtung (6) verbleibenden Hohlraums mit einem Klebstoff ausgefüllt wird, wobei der Klebstoff durch ein oder mehrere Einfülllöcher (7) in der Fülleinrichtung (6) in den Hohlraum eingebracht wird.

5. Verfahren nach Anspruch 4, bei dem vor dem Einbringen von Klebstoff in den Bauteilverbund (1) Fugen zwischen dem Lochbauteil (3) und dem Schlitzbauteil (2) und/oder dem Schlitzbauteil (2) und der Fülleinrichtung (6) verschlossen werden, insbesondere mit Klebeband, das auf eine Außenoberfläche des Bauteilverbunds (1) aufgebracht wird.

6. Verfahren nach einem der Ansprüche 4 oder 5 zum Herstellen von zwei Bauteilverbünden (1) nach einem der Ansprüche 1 bis 5, bei dem ein Teil eines zumindest teilweise aus Holz hergestellten, bestehenden Bauteils durch ein Ersatzbauteil ersetzt wird und in einem Schritt der zu ersetzende Teil des bestehenden Bauteils aus dem bestehenden Bauteil entfernt wird, wobei das bestehende Bauteil zumindest teilweise aufgetrennt und der zu ersetzende Teil entnommen wird, wobei zwei verbleibende Teilabschnitte des bestehenden Bauteils entstehen, die jeweils eine durch das Entnehmen entstandene Entnahmefläche aufweisen, und die verbleibenden Teilabschnitte jeweils als Schlitzbauteil (2) oder als Lochbauteil (3) aufbereitet werden, wozu in jeden der verbleibenden Teilabschnitte ein Loch (11) oder eine langgestreckte Vertiefung (8) eingebracht wird, und das Ersatzbauteil, das komplementäre langgestreckte Vertiefungen (8) bzw. Löcher (11) aufweist, an zwei entgegengesetzten Enden mit jeweils einem der verbleibenden Teilabschnitten verbunden wird, um den zu ersetzenden Teil des bestehenden Bauteils zu ersetzen.

## Claims

1. Component composite (1) for connecting a hole-comprising component (3) comprising wood in essential parts to a slotted component (2) comprising wood in essential parts at a connecting point (13) of the hole-comprising component (3) and a connecting point (12) of the slotted component (2) and by means of a rod (4) with a rod longitudinal axis, wherein
- an outer surface (9) of the slotted component (2) has an elongate depression (8) as far as the connecting point (12) of the slotted component (2),
- the hole-comprising component (3) comprises a hole (11) in its connecting point (13), and
- the rod (4) is stuck into the hole (11) and into the elongate depression (8) so that the hole-comprising component (3) and the slotted component (2) are connected to one another at least via the rod (4) and the connecting points (12, 13),
- the component composite (1) comprises a filling unit (6) in the elongate depression (8), wherein the filling unit (6) at least partially covers a portion of the rod (4) in the depression (8),
**characterised in that**
the filling unit (6) has a through-going filling hole (7) and in particular two or more through-going filling holes (7) which extend(s) from an outer surface of the filling unit (6) disposed on the component composite (1) to a surface of the filling unit (6) disposed inside the depression (8), so that an adhesive can be introduced into the depression (8) through the filling hole(s) (7), and the rod (4) can be stuck in the depression (8) by means of the adhesive.

2. Component composite (1) as claimed in claim 1, in which the rod (4) is designed as a threaded rod (4).

3. Component composite (1) as claimed in any one of the preceding claims, in which a middle of the rod is disposed at the centre of area of the connecting point (12) of the slotted component (2) and/or of the connecting point (13) of the hole-comprising component (3).

4. Method for producing a component composite (1) as claimed in any one of the preceding claims, wherein the hole-comprising component (3) into which the rod (4) is stuck is connected to the slotted component (2) by virtue of the fact that the rod (4) is introduced into the depression (8) in the slotted component (2) and is stuck in the depression (8),
- wherein at least a part of the depression (8) is closed by the filling unit (6), wherein at least a part of the rod (4) is covered by the filling unit (6),
**characterised in that**
- at least a part of a cavity remaining in the depression (8) below the filling unit (6) is filled with an adhesive, wherein the adhesive is introduced into the cavity through one or more filling holes (7) in the filling unit (6).

5. Method as claimed in claim 4, in which, prior to introduction of the adhesive into the component composite (1), gaps between the hole-comprising component (3) and the slotted component (2) and/or the slotted component (2) and the filling unit (6) are closed, in particular with an adhesive strip which is applied to an outer surface of the component composite (1).

6. Method as claimed in any one of claims 4 or 5 for producing two component composites (1) as claimed in any one of claims 1 to 5, in which a part of an existing component produced at least partially from wood is replaced by a replacement component and, in one step, the part of the existing component to be replaced is removed from the existing component, wherein the existing component is at least partially disconnected and the part to be replaced is removed, wherein two remaining partial portions of the existing component are produced which each have a removal surface produced by the removal process, and the remaining partial portions are each prepared as a slotted component (2) or hole-comprising component (3), for which purpose a hole (11) or an elongate depression (8) is introduced into each of the remaining partial portions, and the replacement component, which comprises complementary elongate depressions (8) or holes (11), is connected at two opposing ends to a respective one of the remaining partial portions in order to replace the part, which is to be replaced, of the existing component.

## Revendications

1. Elément composite (1) servant à assembler un élément perforé (3) présentant en grande partie du bois à un élément entaillé (2) présentant en grande partie du bois, au niveau d'un emplacement d'assemblage (13) de l'élément perforé (3) et au niveau d'un emplacement d'assemblage (12) de l'élément entaillé (2) et au moyen d'une tige (4) pourvue d'un axe longitudinal de tige,
dans lequel
- une surface extérieure (9) de l'élément entaillé (2) présente un renfoncement (8) étiré en longueur allant jusqu'à l'emplacement d'assemblage (12) de l'élément entaillé (2),
- l'élément perforé (3) présente en son emplacement d'assemblage (13) un trou (11), et
- la tige (4) est collée dans le trou (11) et dans le renfoncement (8) étiré en longueur, si bien que l'élément perforé (3) et l'élément entaillé (2) sont assemblés l'un à l'autre au moins par l'intermédiaire de la tige (4) et des emplacements d'assemblage (12, 13),
- l'élément composite (1) présente un dispositif de remplissage (6) dans le renfoncement (8) étiré en longueur, dans lequel le dispositif de remplissage (6) recouvre au moins en partie un segment de la tige (4) dans le renfoncement (8),
**caractérisé en ce**
**que** le dispositif de remplissage (6) présente un trou de chargement (7) traversant et en particulier deux trous de chargement (7) traversants ou plus, lequel ou lesquels s'étend/s'étendent depuis une surface, disposée à l'extérieur au niveau de l'élément composite (1), du dispositif de remplissage (6) jusqu'à une surface, disposée à l'intérieur du renfoncement (8), du dispositif de remplissage (6) si bien qu'une colle peut être chargée par le trou ou les trous de chargement (7) dans le renfoncement (8) et que la tige (4) peut être collée dans le renfoncement (8) à l'aide de la colle.

2. Elément composite (1) selon la revendication 1, dans le cadre duquel la tige (4) est réalisée sous la forme d'une tige filetée (4).

3. Elément composite (1) selon l'une quelconque des revendications précédentes, dans le cadre duquel une moitié de la tige est disposée dans le centre de gravité surfacique de l'emplacement d'assemblage (12) de l'élément entaillé (2) et/ou de l'emplacement d'assemblage (13) de l'élément perforé (3).

4. Procédé servant à fabriquer un élément composite (1) selon l'une quelconque des revendications précédentes, dans lequel l'élément perforé (3), dans lequel la tige (4) est collée, est assemblé à l'élément entaillé (2) en ce que la tige (4) est introduite dans le renfoncement (8) de l'élément entaillé (2) et est collée dans le renfoncement (8),
- dans lequel au moins une partie du renfoncement (8) est fermée par le dispositif de remplissage (6), dans lequel au moins une partie de la tige (4) est recouverte par le dispositif de remplissage (6),
**caractérisé en ce**
- **qu'**au moins une partie d'un espace creux restant dans le renfoncement (8) sous le dispositif de remplissage (6) est remplie d'une colle, dans lequel la colle est introduite dans l'espace creux par un ou plusieurs trous de chargement (7) dans le dispositif de remplissage (6).

5. Procédé selon la revendication 4, dans le cadre duquel avant l'introduction de la colle dans l'élément composite (1), des joints sont fermés entre l'élément perforé (3) et l'élément entaillé (2) et/ou entre l'élément entaillé (2) et le dispositif de remplissage (6), en particulier avec une bande adhésive, qui est appliquée sur une surface extérieure de l'élément composite (1).

6. Procédé selon l'une quelconque des revendications 4 ou 5 servant à fabriquer deux éléments composites (1) selon l'une quelconque des revendications 1 à 5, dans le cadre duquel une partie d'un élément existant fabriqué au moins en partie à partir de bois est remplacée par un élément de remplacement, et en ce qu'en une étape la partie à remplacer de l'élément existant est retirée de l'élément existant, dans lequel l'élément existant est sectionné au moins en partie et que la partie à remplacer est prélevée, dans lequel deux segments partiels restants de l'élément existant sont obtenus, lesquels présentent respectivement une surface de prélèvement formée du fait du prélèvement, et que les segments partiels restants sont préparés respectivement sous la forme d'un élément entaillé (2) ou sous la forme d'un élément perforé (3), un trou (11) ou un renfoncement (8) étiré en longueur étant pratiqué à cet effet dans chacun des segments partiels restants, et que l'élément de remplacement, qui présente les renfoncements (8) étirés en longueur ou les trous (11) complémentaires, est assemblé à respectivement un des segments partiels restants au niveau de deux extrémités opposées afin de remplacer la partie à remplacer de l'élément existant.
